# DEMANDE DE BREVET EUROPEEN

(11) **EP 1 166 928 A1**
(43) Date de publication de la demande: **02.01.2002**
(21) Numéro de dépôt: 00810561.1
(22) Date de dépôt: 26.06.2000
(51) Int. Cl.: B23B 13/04

(54) **Dispositif de guidage de barre**

(71) Demandeur: Samsys S.A., 2516 Lamboing (CH)
(72) Inventeur: Geiser, Marc Samuel, 2511 Prêles (CH)
(74) Mandataire: AMMANN PATENTANWAELTE AG BERN

(57) **Abrégé**

Un dispositif de guidage de barre (1) comporte une cartouche (20) dont le tube (21) abrite au moins un élément de guidage de la barre (6) destinée à être usinée, notamment sur un tour CNC. L'élément de guidage comprend une douille de guidage prenant place autour de l'arbre (6), au moins une partie de la surface intérieure de cette douille venant en appui contre ladite barre, directement ou indirectement, grâce à au moins une protubérance ou un joint torique. La douille est solidaire d'une bague intérieure d'un roulement à billes dont la bague extérieure est coiffée d'un bandage en élastomère. Sous l'action de forces de compression, ce bandage est pressé contre le tube (21), le roulement étant ainsi rendu prisonnier dudit tube. Ces moyens, parce qu'ils assurent un guidage précis de la barre à usiner et un bon centrage de celle-ci, tout en limitant à un minimum la masse en mouvement, absorbent toutes vibrations, si bien que la gamme des hautes vitesses de rotation des tours CNC modernes peut être mise à profit.

## Description

La présente invention concerne un dispositif de guidage de barre selon le préambule des revendications indépendantes 1 et 6.

Globalement, le but recherché avec un tel dispositif est triple. Il est impératif, d'abord, de pouvoir exploiter sans restriction les performances qu'atteignent les tours CNC modernes, dont l'une des caractéristiques est leur vitesse de rotation très élevée (de l'ordre de 5000 - 7000 [t/mn] dans le domaine d'application de l'invention). Il apparaît souhaitable, ensuite, de tirer profit autant que faire se peut des avantages que procure un ravitailleur dit ravitailleur de barres courtes, tout en minimisant ses inconvénients. Enfin, il est non moins primordial que le dispositif de guidage de barre offre les meilleures garanties quant à la sécurité d'utilisation.

Traditionnellement, le ravitaillement des tours en barres était assuré par des ravitailleurs dits ravitailleurs de barres longues (en général, barres standard ayant une longueur de 3000 [mm] ou de 12 [pied] en Europe ou aux USA respectivement). Ce type de ravitailleur remplissait une double fonction, soit, outre la fonction de ravitaillement, celle de guidage de barre, tandis qu'il permettait de minimiser les chutes et les cycles de ravitaillement. Mais d'un autre côté, son coût était relativement élevé, alors même que sa mise en oeuvre était lourde et difficile.

Les développements et perfectionnements apportés aux tours CNC ont permis d'élever considérablement les vitesses de rotation, avec le cortège des avantages en résultant (réduction du temps des opérations d'usinage, amélioration de la qualité de ces opérations, élargissement du champ d'application des tours, etc.). Or cette évolution s'est avérée inversement proportionnelle à l'intérêt de l'utilisation du ravitailleur barres longues. En effet, on comprend qu'eu égard , d'une part, à la masse des barres à usiner (à titre d'illustration, la masse d'une barre d'acier de 3 [m] et de 40 [mm] de diamètre est d'environ 30 [kg] (et de 77 [kg] lorsqu'elle présente un diamètre de 65 [mm])) et, d'autre part, à la difficulté d'un réglage fin et fiable du ravitailleur (c'est-à-dire du positionnement axe de la barre - axe de la broche du tour, ces deux axes devant se trouver sur une même droite), de fortes vibrations se manifestent lorsque la vitesse de rotation dépasse un certain seuil (par exemple, ce seuil est de l'ordre de 2000 [t/mn] pour une barre de 65 [mm] de diamètre). L'utilisation d'un ravitailleur barres longues proscrit ou interdit donc l'exploitation de vitesses supérieures audit seuil, sauf à faire subir notamment aux éléments mécaniques du tour des dommages irréversibles et à provoquer un rapide délabrement de la machine-outil.

Cela explique au moins en partie l'abandon progressif du ravitailleur barres longues au profit du ravitailleur barres courtes, du genre de celui connu sur le marché sous la dénomination "MULTISAM". La longueur d'une barre courte correspond à la longueur de la broche du tour, laquelle se situe en général entre 700 [mm]et 1100 [mm]; elle résulte donc du sectionnement en trois ou quarre parties égales d'une barre standard. En comparaison avec le ravitailleur barres longues, le ravitailleur barres courtes offre des avantages sur les plans économique et technique (mais présente aussi un inconvénient dont on parlera plus loin). D'abord, pour un investissement moins lourd, sa mise en oeuvre est sensiblement plus souple et permet des mesures intéressantes de rationalisation et de suppression de chocs (comme le montre, à titre d'exemple, un dispositif de chargement et de déchargement de barres décrit notamment dans EP-97810635.9/0 900 612 A1). Ensuite, son réglage est non seulement plus facile et plus rapide à effectuer, mais aussi plus précis et plus fiable. Enfin, du fait que la masse en mouvement est diminuée et que le positionnement radial (superposition des axes de la barre et de la broche du tour) est correct, les vibrations sont réduites à un minimum. Aussi ce type de ravitailleur, dont la demande connaît une forte croissance, détrône le ravitailleur barres longues et est considéré de plus en plus comme un équipement standard.

Toutefois, l'adoption du ravitailleur barres courtes confronte l'homme du métier à une nouvelle problématique qu'il convient de résoudre. En effet, des coûts supplémentaires sont engendrés par les opérations de réduction de la longueur des barres, réduction qui elle-même entraîne une augmentation du nombre de chutes et de cycles de ravitaillement, tandis que, de surcroît, les deux fonctions évoquées plus haut à propos du ravitailleur barres longues (ravitaillement et guidage de barre) sont scindées.

La solution de principe à ce problème est apportée par la création de dispositifs de guidage de barre, lesquels constituent en quelque sorte une extension ou un prolongement de la broche du tour. Ces dispositif permettent d'usiner des barres d'une longueur d'environ 1'500 [mm].

A ce jour, il existe essentiellement deux types de dispositifs de guidage de barre.

Un premier type, proposé par exemple par CNC Enhancements, USA, consiste en un tube de protection muni de bagues en matière synthétique du genre "Delrin", ce tube et le bâti le portant étant placés entre l'arrière de la broche du tour et l'avant du ravitailleur barres courtes. Aussi bien les bagues que le tube sont fixes (l'ensemble {tube + éléments logés dans le tube} étant dénommé cartouche).

Ce type de dispositif répond aux exigences de sécurité, l'accès à la barre en rotation étant empêchée. En revanche, en dépit de la réduction de la masse en mouvement à un minimum, le seul élément en mouvement étant la barre en phase d'usinage, sa construction est telle qu'un usinage à des vitesses de rotation supérieures à 3000[t/mn] environ est exclu. En effet, cette conception, qui prévoit un jeu, fut-il faible, entre le diamètre intérieur des bagues et le diamètre de la barre, conduit à une impasse: dans l'hypothèse où le matériau dans lequel sont composées les bagues est trop mou, ce jeu ira augmentant avec l'utilisation du dispositif, du fait de l'échauffement, c'est-à-dire de la perte de matière en résultant, ce qui augmentera le balourd, et dans l'hypothèse où le matériau est dur, l'apparition de vibrations ne sera pas écartée, principalement à raison des phénomènes de résonance.

Un second type, proposé par exemple par Elbe - Israël et Enzi, Allemagne, comporte un tube d'extension couplé au cylindre de serrage du tour. Ce dispositif comporte un tube auquel sont liées des bagues de guidage, l'ensemble {tube + bagues} (cartouche) étant tournant, c'est-à-dire soumis au même mouvement de rotation que la barre en phase d'usinage: la vitesse de rotation de celle-ci est synchrone avec la vitesse de rotation dudit ensemble. Un jeu entre le diamètre intérieur des bagues et le diamètre de la barre, de l'ordre de 0.5 - 1.0 [mm], est prévu.

Avec ce deuxième type de dispositif, l'exploitation des vitesses de rotation élevées est également condamnée, à l'instar du premier type venant d'être commenté. En effet, à l'imperfection du guidage s'ajoute l'augmentation importante de la masse en mouvement, génératrice de vibrations, tandis que l'augmentation des charges radiales sur le cylindre de serrage du tour réduit la durée de vie de ce dernier, De plus, pour assurer un minimum de sécurité, des moyens de protection onéreux interdisant l'accès à l'ensemble en mouvement doivent être prévus (carénage). Enfin, le changement de mise en train (adaptation du diamètre de guidage intérieur de la barre au diamètre matière, c'est-à-dire au diamètre de la barre) est lourd et difficile.

De manière générale, lorsqu'un jeu règne entre le diamètre de la barre à usiner et le diamètre des bagues-supports, comme c'est le cas dans les dispositifs de l'art antérieur, et que ladite barre est soumise à une vitesse d'entraînement en rotation élevée, un phénomène de broutage, dû à la force centrifuge, va s'instaurer: la barre entrera en contact avec les bagues de guidage de façon aléatoire et discontinue, en des endroits différents, de sorte que ces bagues dans les dispositifs où elles sont en mouvement, tourneront par à-coups, ce qui provoquera de fortes vibrations, donc une usure prématurée desdites bagues et du dispositif et de graves désordres sur le tour. Ces inconvénients sont aggravés, en tout état de cause, par le balourd généré par les défauts de géométrie plus ou moins importants que l'on observe toujours sur les barres à usiner.

Partant de ces constats, le problème qu'il convient de résoudre, si l'on veut atteindre le but indiqué en introduction, porte, d'une part, sur la qualité du guidage de la barre à usiner, tout en limitant le plus possible la masse en mouvement, et, d'autre part, sur la facilité et simplicité des mises en train du dispositif ainsi que sur la sécurité de la mise en oeuvre de ce dernier.

Ce problème est résolu grâce aux moyens définis dans la partie caractérisante des revendications indépendantes 1 et 6. Des revendications dépendantes permettent de réaliser le dispositif de guidage de barre à bon compte.

Grâce aux moyens de l'invention, un guidage précis de la barre à usiner est assuré, ce qui écarte toutes vibrations et permet, par conséquent, d'effectuer des usinage dans les meilleures conditions jusqu'aux vitesses de rotation les plus élevées qu'atteignent les tours actuels. Le cylindre de serrage du tour n'est pas soumis à des surcharges; plus généralement, tous les éléments mécaniques du tour sont préservés au maximum. Le dispositif selon l'invention répond aux exigences les plus drastiques en matière de sécurité et la durée de vie de celui-ci est considérablement augmentée. Enfin, les changements de mise en train deviennent des opérations aisées et rapides, ce qui réduit les coûts.

La description détaillée ci-après d'une forme d'exécution préférée du dispositif de guidage de barre, à titre d'exemple non limitatif, à l'appui des dessins annexés, permettra de bien appréhender les moyens de l'invention et des avantages qu'ils procurent.

Dans ces dessins,
la figure 1 montre un ensemble regroupant le dispositif de guidage de barre, un ravitailleur barres courtes et un tour,
les figures 2 et 3 montrent une vue de face et une vue en perspective, respectivement, du dispositif de guidage de barre,
la figure 4 représente en demi-coupe une cartouche d'extension de broche supportant la barre à usiner,
la figure 5 est une vue de face d'une bague frontale de la cartouche,
la figure 6 est une coupe de cette bague frontale selon une ligne VI - VI de la figure 5,
la figure 7 est une représentation d'un élément élastique qu'abrite la bague frontale,
la figure 8 est une vue de face d'une première sorte d'un élément de guidage,
la figure 9 est une coupe de cet élément de guidage selon une ligne IX - IX de la figure 8,
la figure 10 est une partie de coupe équivalente à la figure 9, selon un état de l'élément de guidage,
la figure 11 est une vue de face d'une deuxième sorte d'élément de guidage,
la figure 12 est une coupe de cette deuxième sorte d'élément de guidage selon une ligne XII - XII de la figure 11,
la figure 13 est une vue de face d'une première variante d'une douille de guidage,
la figure 14 est une coupe de cette première variante de douille selon une ligne XIV -XIV de la figure 13 et
les figures 15, 16 et 17, 18 sont des figures analogues aux figures 13 et 14, respectivement, d'autres variantes de douilles.

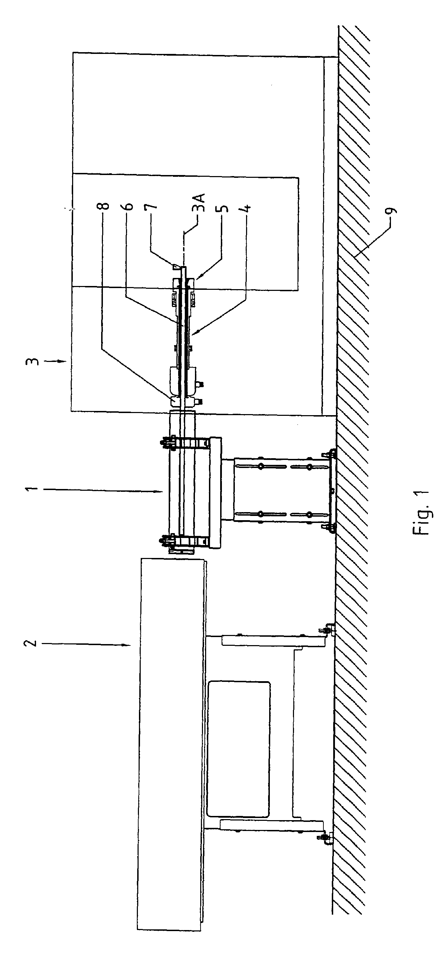

La figure 1 montre, schématiquement, le dispositif de guidage de barre 1 agencé entre un ravitailleur barres courtes 2 et un tour CNC 3. Une barre 6, destinée à être usinée sous l'action d'un burin 7, émerge d'un mandrin 5 et s'étend à l'arrière dans la broche 4 et le dispositif de guidage 1 en passant par un cylindre de serrage 8.

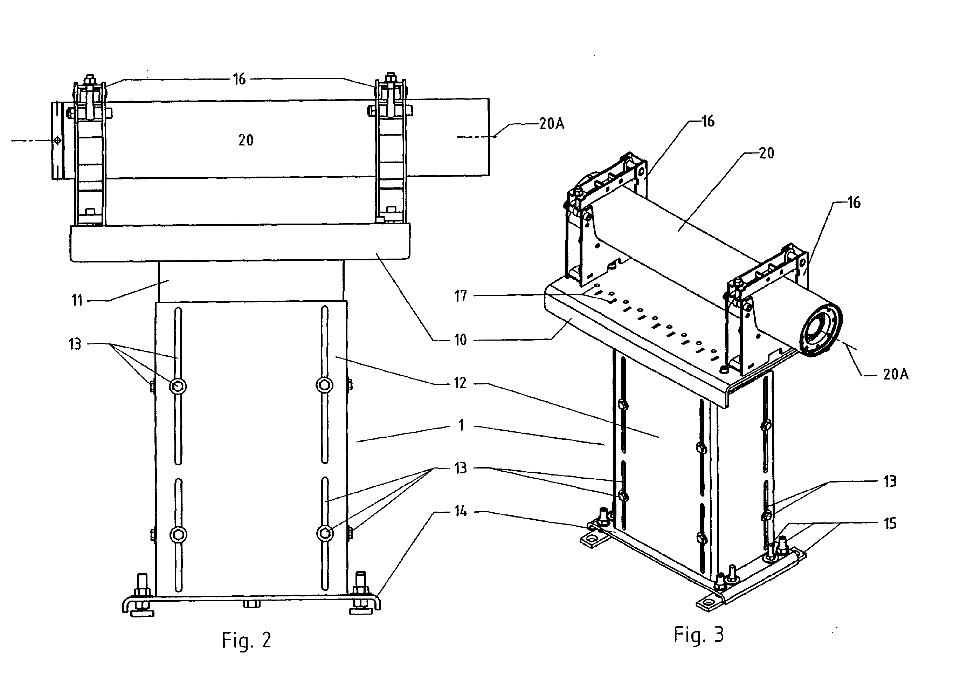

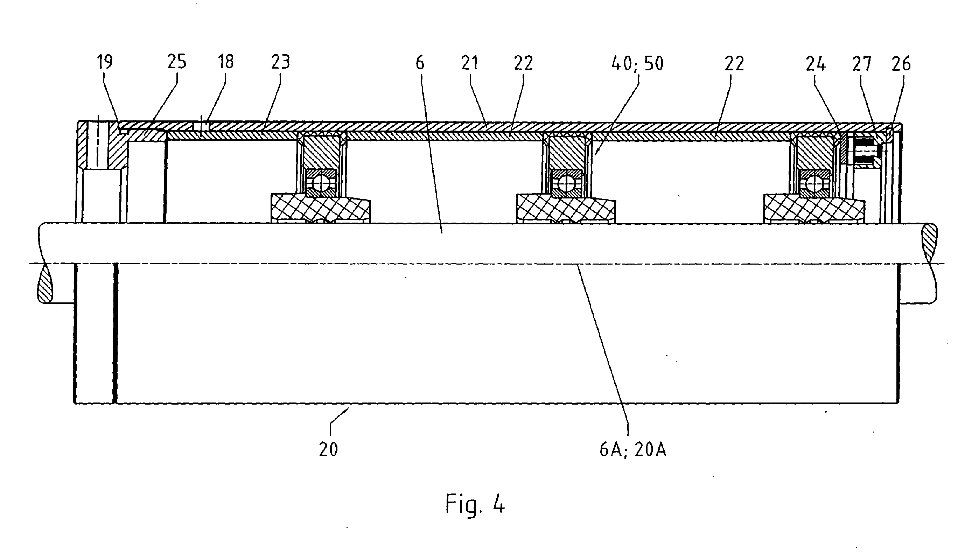

Les figures 2 et 3 permettent de mieux se représenter le dispositif de guidage de barre 1. Celui-ci comprend essentiellement une table 10 solidaire d'un pied 11, l'ensemble 10, 11, pouvant coulisser dans un bâti 12, étant ajustable en hauteur, grâce à des moyens connus de référence unitaire 13, aux fins de positionnement (cf. infra). La partie inférieure du bâti se termine par un socle 14 pouvant être relié au sol 9 (figure 1) par l'intermédiaire d'éléments d'ancrage 15. La table 10 est équipée d'une paire d'étriers 16 portant et bloquant la cartouche d'extension 20. Les étriers 16 peuvent être placés en différents endroits sur la table 10 (voir perforations 17 pratiquées sur ladite table), en fonction de la longueur de la cartouche 20, elle-même choisie en fonction de la longueur de la barre 6 à usiner. Revenant au positionnement de la table 10, on comprend que l'axe 6 A de la barre 6 (figure 4) devra se confondre avec l'axe 20 A de la cartouche 20, les axes 6 A et 20 A devant eux-mêmes se situer dans le prolongement de l'axe 3 A de la broche du tour 3 (figure 1).

La cartouche 20 (figure 4) comprend un tube porteur (ou enveloppe tubulaire) 21 dans lequel sont logés des éléments de guidage (ou bagues-supports) 40 de la barre 6, des éléments de distance 22, 23, 24 en vue du positionnement axial desdites bagues 40 (les éléments 22 et 23, de longueur différente, étant tubulaires, l'élément 24 présentant la forme d'une rondelle), des bagues 26, 27 agencés dans la zone avant (orientée du côté du tour) et, enfin, à l'opposé, un écrou de serrage 25.

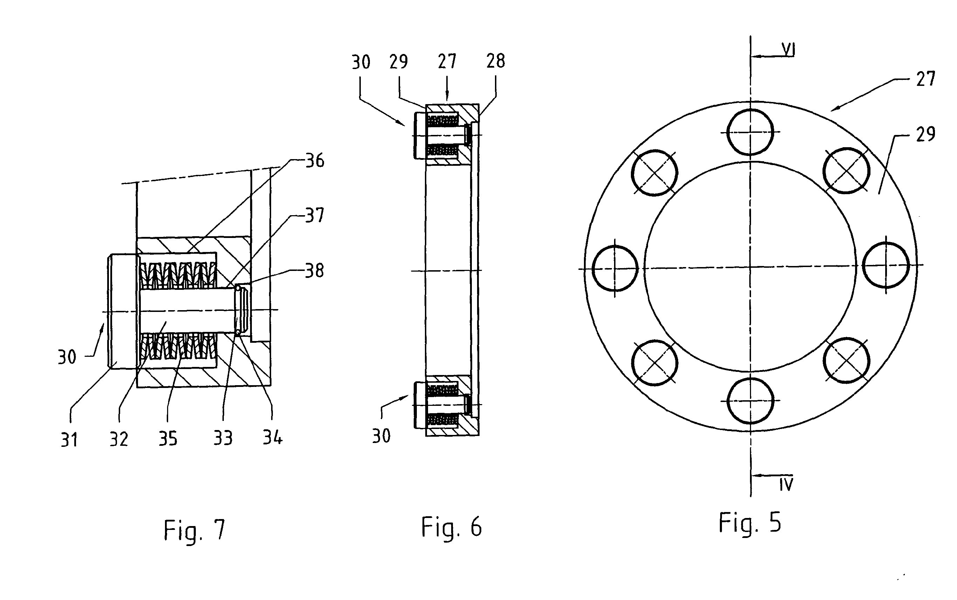

La bague 27 est représentée plus en détail dans les figures 5 et 6. Elle présente deux faces parallèles 28, 29 et son diamètre extérieur correspond au diamètre intérieur du tube 21. La face 28 est en appui contre la face interne (non référencée) de la bague d'arrêt 26 (liaison en translation) (figure 4). La bague 27 comporte des logements (au nombre de huit selon l'exemple), en forme d'alésages étagés 36, 37, 38, dans lesquels sont agencés des éléments de compression 30 (voir figure 7).

Chaque élément de compression comporte un bouton formé d'une tête 31 et d'une tige 32 dont l'extrémité est pourvue d'une rainure 33 dans laquelle prend place un anneau de blocage 34, et d'éléments élastiques travaillant à la compression (selon l'exemple représenté, des rondelles Belleville empilées sur la tige 32 logés dans l'alésage 36). Le diamètre extérieur de la tête 31 correspond (avec un léger jeu) au diamètre intérieur de l'alésage 36.

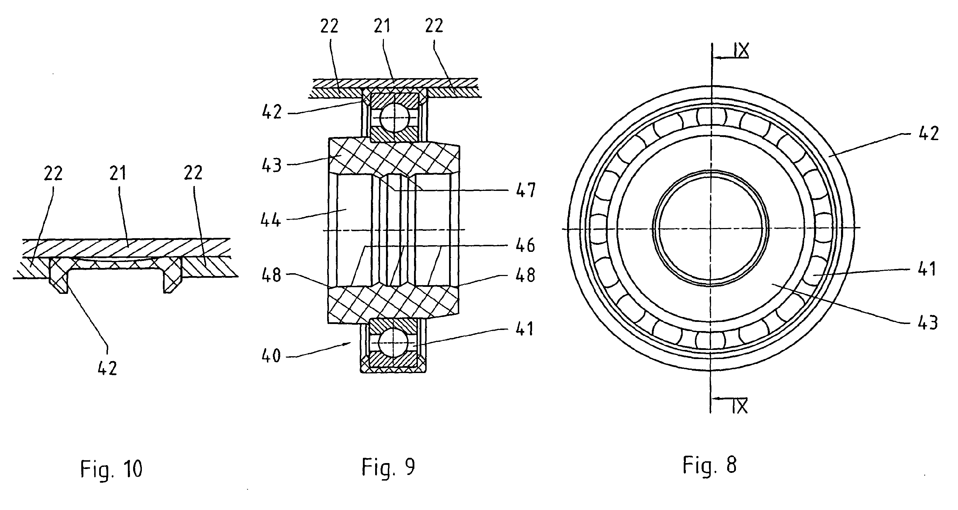

Les figures 8, 9 et 11, 12 montrent des éléments de guidage (bagues-supports) 40 et 50 respectivement.

L'élément 40 (figures 8 et 9) comporte un roulement à billes 41 dont la cage ou bague extérieure (non référencée) est logée, c'est-à-dire serrée dans un bandage (bague auxiliaire) 42. Le diamètre extérieur de l'élément de guidage, plus précisément du bandage 42 est, en l'absence de sollicitation exercée sur lui, légèrement inférieur au diamètre intérieur du tube 21, de telle sorte que l'élément 40 puisse juste glisser le long du tube lors du montage/démontage, c'est-à-dire lorsque l'on place l'élément de guidage dans le tube 21 ou lorsque l'on extrait cet élément de ce dernier. La cage ou bague intérieure (non référencée) de ce roulement 41 est équipée d'un moyen de guidage 43 (selon l'exemple une douille de guidage) dont au moins une partie de la surface intérieure est, comme on le verra plus loin, en contact avec l'arbre 6 à usiner.

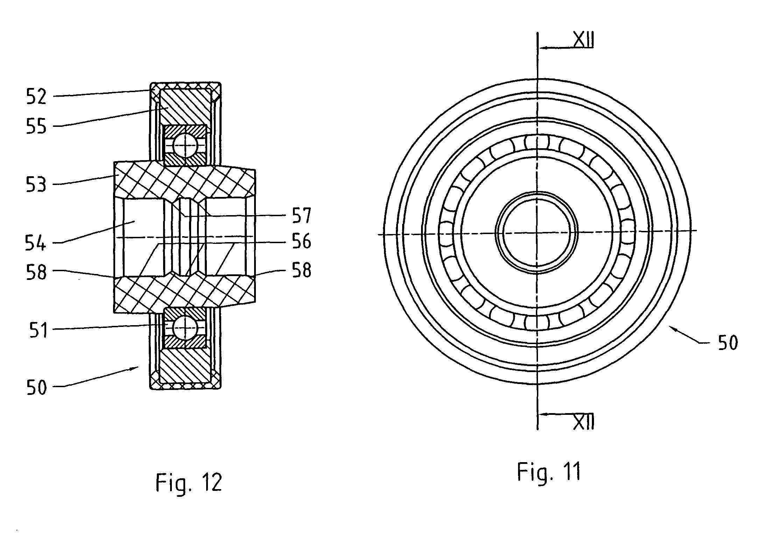

L'élément de guidage 50 (figures 11 et 12), prévue pour des barres de plus petit diamètre, comporte un roulement à billes 51 et une douille de guidage 53 de dimensions inférieures à celles du roulement 41 et de la douille 43 respectivement. Le diamètre extérieur de l'élément de guidage 50 devant correspondre au diamètre intérieur du tube 21 (avec un léger jeu, comme cela vient d'être précisé plus haut), une bague de réduction 55, en matériau léger (tel que l'aluminium ou le Duralumin) est montée sur la bague extérieure du roulement 51, un bandage 52, équivalent au bandage 42 de la bague 40, coiffant ladite bague de réduction 55. Cette construction permet de réduire au minimum la masse en mouvement.

Les bagues (ou bandages) 42; 52 sont en matière déformable, de préférence en élastomère (ou en matériau composite), présentant un degré de déformabilité defini, ces bagues étant appelées à se plaquer contre la paroi intérieure du tube 21 sous l'effet d'une force de compression (voir figure 10). Les douilles 43; 53 sont de préférence façonnées dans un matériau (pouvant être composite) que l'on choisira pour ses propriétés spécifiques, c'est-à-dire de rigidité suffisante pour résister aux charges radiales mais également d'un degré de déformabilité défini, aux fins d'amortir/absorber d'éventuelles vibrations rémanantes (par exemple un matériau ayant une dureté de l'ordre 85 [shore]. Il est possible également de prévoir une douille de guidage formée de deux parties, dont une première, métallique, serrée sur la bague intérieure du roulement 41; 51; porte la seconde partie devant entrer en contact avec l'arbre 6, seule cette dernière étant composée dans le matériau particulier précité.

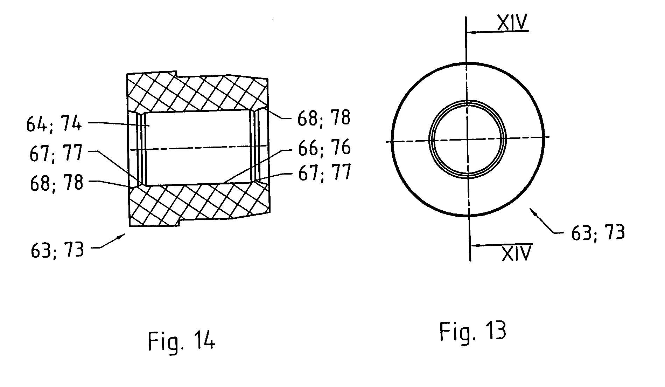

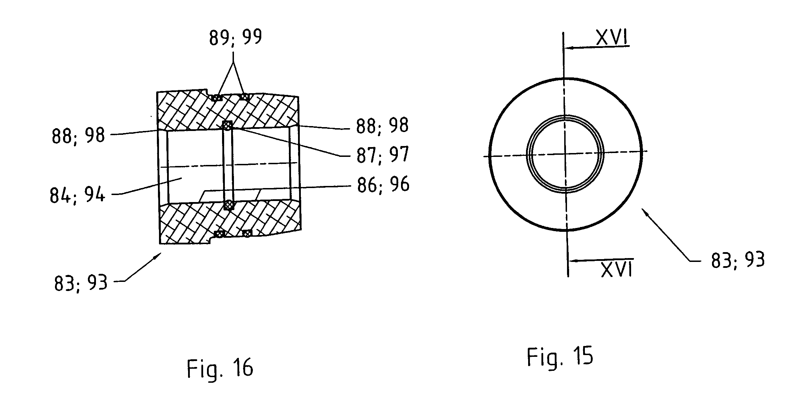

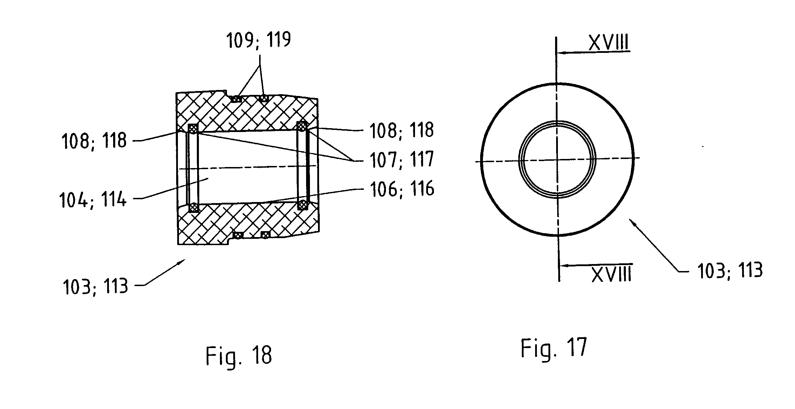

Les figures 9, 12; 14; 16 et 18 montrent en coupe différentes variantes de douilles de guidage, mais présentant toutes une particularité commune quant à leur alésage (référence générale 44 pour la douille 43 (figure 9), 54 pour la douille 53 (figure 12), 64; 74 pour la douille 63; 73 (figure 14, grand et petit diamètre respectivement, à l'instar des douilles 43; 53), 84; 94 pour la douille 83; 93 (figure 16) et 104; 114 pour la douille 103; 113 (figure 18)). Bien entendu, la qualification de grand et petit diamètres quant aux éléments et/ou douilles de guidage doit être entendu uniquement pour fixer les idées, puisqu'il va de soi que l'on prévoira, en pratique, toute une gamme d'éléments de guidage adaptés aux différents diamètres standard des barres à usiner.

En prenant l'exemple de la figure 9, l'alésage 44 présente, d'une part, des parties d'alésage 46 ayant un diamètre légèrement supérieur au diamètre de la barre à usiner 6 (avantageusement + 0.5 - + 0.7 [mm]), ces parties 46 débouchant sur des chanfreins 48, et, d'autre part, au moins une protubérance (ou lèvre) 47, de préférence deux, le diamètre formé par ces lèvres étant au contraire légèrement inférieur au diamètre de la barre 6 (avantageusement - 0.1 - -0.2 [mm]). Ces particularités se retrouvent à l'identique dans la figure 12 (références 56, 58 et 57) et dans la figure 14 (références 66, 68 et 67). Dans tous les cas, le degré de serrage de l'ajustage de la douille de guidage sur l'arbre à usiner est déterminé en fonction d'une force d'appui prédéterminée que l'on souhaite faire exercer par chaque protubérance 47 (57; 67; etc.) sur la barre 6 (et vice versa, conformément au principe d'action/réaction), sans entraver le déplacement axial de la barre 6 sous l'effet d'une poussée pouvant être exercée sur cette dernière (avance de la barre aux fins d'usinage). Ainsi, une triple fonction, soit de centrage de la barre 6 de guidage, de guidage de celle-ci- et d'entraînement radial du roulement 41, est-elle remplie de façon idéale, car fiable techniquement et intéressante économiquement.

Selon les variantes représentées dans les figures 16 et 18, on observe que les fonctions remplies par les protubérances 47 (figure 9); 57 (figure 12), 67; 77 (figure 14), sont assurées par des joints toriques 87; 97 (figure 16) et 107; 117 (figure 18). Les autres références portant sur les alésages 84; 94 (figure 16) et 104; 114 (figure 18) correspondent aux références analogues notamment de la figure 9. On remarque en outre que la retenue de la bague intérieure des roulements destinés à être montés sur les douilles 83; 93 (figure 16) et 103; 113 (figure 18) est améliorée par des joints toriques 89; 99 (figure 16 et 109; 119 (figure 18) agencés sur les parties correspondantes (non référencées) de ces douilles.

La cartouche 20 est préparée de la manière suivante (voir figure 4). Dans un premier temps, l'ensemble {bague frontale 27 munie des éléments de compression 30 et élément de distance 24} est glissé dans le tube 21, puis la bague d'arrêt 26 est enclipsée dans la rainure (non référencée) aménagée à cet effet dans la partie extrême à l'avant du tube 21 (liaison axiale vers l'avant). Dans un deuxième temps, le nombre adéquat de bagues-supports (éléments de guidage appropriés (par exemple des bagues 40 ou 50 (dans la figure 4 sont représentés des éléments de guidage 50)) et les éléments de distance 22; 23 assurant le maintien en position des éléments de guidage (étant entendu que l'on pourrait prévoir là aussi des éléments 24, si cela devait s'avérer nécessaire) sont disposés en alternance dans le tube 21. Dans un troisième temps, l'écrou 25 est vissé sur un taraudage (non référencé) que présente la partie terminale arrière du tube 21, étant précisé que la face extrême 19 remplit la fonction de butée de sécurité. Les actions conjuguées de serrage de l'écrou 25 et des éléments de compression 30 provoquent, par l'intermédiaire desdits éléments de distance, un écrasement axial de la bande élastomère 42 (52)(voir figure 10) ces éléments de compression permettant de maîtriser et de limiter la force de pression agissant sur le bandage (42; 52). La cartouche 20 ainsi assemblée est enfin fixée sur les étriers 16 (figures 2 et 3), après positionnement, grâce à un trou 18 (figure 4) coopérant avec un élément de retenue (non représenté) prévu sur l'étrier 16 arrière. Selon une forme d'exécution moins élaborée, on peut obtenir ledit écrasement sans les éléments 30, mais la maîtrise de la force d'écrasement sera alors plus aléatoire.

Ainsi, grâce au fait que les éléments de guidage comportent des moyens qui sont en contact avec la barre à usiner avec une force nécessaire et suffisante - voir supra - (selon l'exemple décrit, ces moyens étant formés d'au moins une protubérance sur un élément agencé à la périphérie de la barre à usiner (selon l'exemple une douille de guidage pourvue d'au moins une lèvre ou d'un joint torique), l'invention assure, d'une part, un guidage précis de cette barre et, d'autre part, l'entraînement en rotation d'un moyen réducteur de frottement, en l'occurrence la bague intérieure d'un roulement à billes, tandis qu'un bandage en matière déformable, telle que l'élastomère, monté sur la bague extérieure du roulement, assure la liaison dudit roulement au tube 21, tout en protégeant le roulement. Ces moyens permettent l'exploitation des plus hautes vitesses d'usinage, cela avec une remarquable douceur de marche, les moyens que comprennent les éléments de guidage absorbant toutes les vibrations.

De plus, la masse en mouvement est réduite à un minimum. En effet, elle ne comprend, d'une part, que la masse de la barre en rotation et, d'autre part, les masses (très faibles) des douilles de guidage et des bagues intérieures des roulements sur lesquelles ces douilles sont fixées.

Enfin, l'opération consistant à changer les bagues-supports (= mise en train) est rapide et aisée. Il suffit de desserrer l'écrou 25, ce qui provoque le relâchement de la compression exercée sur les bandes élastomères, lesquelles reprennent alors leur diamètre initial légèrement inférieur au diamètre intérieur du tube 21, ce qui permet de sortir facilement un à un les éléments qui y sont logés (éléments de distance et éléments de guidage), puis de remplacer ces éléments par d'autres, en fonction des dimensions de la prochaine barre à usiner.

## Revendications

1. Dispositif de guidage de barre (1) comportant une cartouche (20) présentant un tube (21) abritant au moins un élément de guidage de la barre (6) destinée à être usinée plus particulièrement sur un tour CNC, caractérisé en que l'élément de guidage (40; 50) est pourvu de moyens en contact avec la barre (6) et mis en mouvement avec celle-ci en phase de travail, le tube (21) de la cartouche (20) restant fixe.

2. Dispositif de guidage de barre selon la revendication 1, **caractérisé en ce que** les moyens de contact sont formés d'au moins une protubérance (47; 57; 67; 77) que présente une douille de guidage (43; 53; 63; 73).

3. Dispositif de guidage de barre selon la revendication 1, **caractérisé en ce que** les moyens de contact sont formés d'au moins un joint torique (87; 97; 107; 117) que présente une douille de guidage (83; 93; 103; 113).

4. Dispositif de guidage de barre selon la revendication 2 ou 3, **caractérisé en ce que** la douille de guidage coopère avec un moyen réducteur de frottement formé de préférence d'un roulement à billes, ladite douille étant fixée sur la bague intérieure dudit roulement à billes.

5. Dispositif de guidage de barre selon l'une des revendications 1 à 4, **caractérisé en ce que** les moyens en contact avec la barre (6) présentent un degré de déformabilité défini.

6. Dispositif de guidage de barre (1) comportant une cartouche (20) présentant un tube (21) abritant au moins un élément de guidage de la barre (6) destinée à être usinée plus particulièrement sur un tour CNC, caractérisé en que l'élément de guidage (40, 50) est pourvu, à sa périphérie, d'un bandage (42;52) pouvant s'appuyer contre la face intérieure du tube (21) sous l'effet d'une sollicitation.

7. Dispositif de guidage de barre selon la revendication 6, **caractérisé en ce que** la sollicitation résulte d'une force de compression axiale exercée sur le bandage (42; 52).

8. Dispositif de guidage de barre selon la revendication 6 ou 7, **caractérisé en ce que** le bandage (42; 52) coopère avec un moyen réducteur de frottement formé de préférence d'un roulement à billes, ledit bandage étant fixé, soit directement sur la bague externe dudit roulement à billes, soit indirectement par l'intermédiaire d'une bague de réduction (55).

9. Dispositif de guidage de barre selon l'une des revendications 6, 7 ou 8, **caractérisé en ce que** le bandage (42; 52) présente un degré de déformabilité défini.

10. Dispositif de guidage de barre selon l'une des revendications 1 à 5, intégrant les caractéristiques de l'une quelconque des revendicatives 6 à 9.

11. Dispositif de guidage de barre selon l'une des revendications 1 à 10, caractérisé en ce qe la cartouche (20) comprend des moyens de compression (30).

12. Dispositif de guidage de barre selon l'une des revendications 1 à 11, **caractérisé en ce que** la cartouche (20) comprend des élements de distance (22; 23; 24).

13. Dispositif de guidage de barre selon la revendication 12, **caractérisé en ce que** les élements de distance (22; 23; 24) coopèrent directement ou indirectement avec les moyens de compression (30) sous l'effet du serrage d'un écrou (25).
